# EUROPEAN PATENT APPLICATION

(11) **EP 4 768 424 A1**
(43) Date of publication of application: **01.07.2026**
(21) Application number: 25225474.3
(22) Date of filing: 19.12.2025
(51) Int. Cl.: B66F 9/24

(54) **METHOD OF CONTROLLING CREEP TRACTION OF AN ELECTRIC FORKLIFT**

(30) Priority: 19.12.2024 KR 20240191463
(71) Applicant: HD Hyundai XiteSolution Co., Ltd., Seongnam-si, Gyeonggi-do 13553 (KR)
(72) Inventor: Lee, Won Ho, 13553 Seongnam-si, Gyeonggi-do (KR); Jeon, Heon Seop, 13553 Seongnam-si, Gyeonggi-do (KR); Lee, Hyo Kyu, 13553 Seongnam-si, Gyeonggi-do (KR); Jung, Jae Hwan, 13553 Seongnam-si, Gyeonggi-do (KR)
(74) Representative: Isarpatent

(57) **Abstract**

There is disclosed a method of controlling creep traction of an electric forklift including detecting user's creep traction approval, detecting generation of a neutral gear signal and user's sitting (S100), detecting the neutral gear signal changing to a forward signal or a reverse signal (S101) and the user's remaining seated state, detecting an acceleration signal and the user's remaining seated state or detecting a state in which a brake signal is not input and the user's remaining seated state S102), displaying a warning to the user regarding creep traction (S103) and performing the creep traction (S104).

## Description

### Technical Field

Embodiments of the present disclosure relate to a method of controlling creep traction of an electric forklift.

### Background of the Disclosure

Low idle is an inherent function of engine forklifts to increase fuel efficiency, extend engine life, and reduce exhaust emissions. Due to low idle, the engine operates so that the RPM (Revolutions Per Minutes) does not reach 0 even if the user does not operate the accelerator, and power is continuously transmitted to the drivetrain, enabling low-speed driving. This low-speed driving function is called creep function, and the low-speed driving state is called creep traction. The creep function of forklifts is a function that provides high convenience to the user and is used in construction sites.

However, the creep function is a secondary function that operates based on the operation of the engine, so there was a problem in that this function could not be applied to electric forklift that uses battery power.

### SUMMARY

Accordingly, one object of the embodiments of the present disclosure is to solve the above-noted disadvantages of the prior art, and to provide a method of applying and controlling a creep function in an electric forklift.

The objects of the present disclosure are not limited to those mentioned above, and other technical objects may be inferred from following embodiments.

According to an embodiment of the present disclosure, a method of controlling creep traction of an electric forklift comprising detecting user's creep traction approval, detecting generation of a neutral gear signal and user's sitting, detecting the neutral gear signal changing to a forward signal or a reverse signal and the user's remaining seated state, detecting an acceleration signal and the user's remaining seated state or detecting a state in which a brake signal is not input and the user's remaining seated state, displaying a warning to the user regarding creep traction and performing the creep traction.

Here, the creep traction is performed simultaneously with one or more of detecting a brake signal and stopping of the electric forklift, detecting whether a driving lever is in a neutral driving state, detecting the user's sitting or detecting a hydraulic work device operation signal, and wherein the creep traction is stopped when the user's sitting is not detected during the creep traction.

If the neutral signal changed to the forward signal or reverse signal is not detected or the user's sitting state is not detected during the detecting the neutral gear signal changing to the forward signal or reverse signal and the user's remaining seated state, the detecting generation of the neutral gear signal and the user's sitting is performed again.

If the acceleration signal and the user's remaining seated state are not detected or the brake signal is detected or the user's remaining seated state is not detected during the detecting the acceleration signal and the user's remaining seated state or detecting the state in which the brake signal is not input and the user's remaining seated state, the detecting generating of the neutral gear signal and the user's sitting is performed again.

The performing of the creep traction comprises maintaining the creep traction when the brake signal is not detected or the stopping of the electric forklift is not detected during the creep traction in the detecting the brake signal and the stopping of the electric forklift, and maintaining the creep traction when the user's sitting is detected although the brake signal and the stopping of the electric forklift are detected during detecting the brake signal and the stopping of the electric forklift.

The performing the creep traction comprises maintaining the creep traction, if user's driving lever, button, or similar operating device is not in a neutral state in step of detecting whether the user's driving lever, button, or similar operating device is in the neutral state during the creep traction, and maintaining the creep traction, if the driving is in a neutral state in the step of detecting whether the driving is in the neutral state and the user's sitting is detected in the step of detecting the user's sitting during the creep traction.

The performing the creep traction comprises maintaining the creep traction if a hydraulic working device operation signal is not detected in the step of detecting the hydraulic working device operation signal.

The performing the creep traction further comprises detecting the user's sitting before operating the work device if the hydraulic work device operation signal is detected in the step of detecting the hydraulic work device operation signal, and wherein the detecting the user's sitting before operating the work device terminates the creep traction if the user's sitting is not detected and operates a work device actuator if the user's sitting is detected.

The performing the creep traction performs the step of detecting generation of the neutral gear signal and the user's sitting more repeatedly and simultaneously with the step of the performing the creep traction.

The detecting the acceleration signal and the user's remaining seated state or detecting the state in which the brake signal is not input and the user's remaining seated state performs normal driving, without displaying a warning to the user regarding creep traction and performing the creep traction, if the acceleration signal exceeding a preset voltage is detected.

The detecting user's creep traction approval is performed during at least one step of the detecting generation of a neutral gear signal and user's sitting, the detecting the neutral gear signal changing to a forward signal or a reverse signal and the user's remaining seated state, and the detecting an acceleration signal and the user's remaining seated state or detecting a state in which a brake signal is not input and the user's remaining seated state

The detecting the user's creep traction approval comprises at least one of detecting the user's creep traction approval according to a creep traction approval information which the control system stores in a storage device or detecting the user's creep traction approval by combining whether the user is seated and a signal of the driving lever operated by the user.

The detecting the acceleration signal and the user's remaining seated state, or detecting the state in which the brake signal is not input and the user's remaining seated state performs again the detecting generation of the neutral gear signal and the user's sitting, if the user's creep traction approval is not detected.

The method further comprises detecting the release of the parking state of the electric forklift.

According to one embodiment of the present invention, a method may be provided in which creep traction is possible and may be controlled in an electric forklift, and a safety function is added.

However, it should be understood that the detailed description and specific examples, while indicating preferred embodiments of the invention, are given by illustration only, since various changes and modifications within the spirit and scope of the invention will become apparent to those skilled in the art from this detailed description.

### DESCRIPTION OF DRAWINGS

FIG. 1 is a flowchart illustrating a method of controlling creep traction according to an embodiment of the present disclosure;
FIG. 2 is a flowchart illustrating a method of controlling creep traction in contrast to an embodiment of the present invention.
FIG. 3 is a graph illustrating the motor RPM based on an acceleration signal when not in a creep traction state; and
FIG. 4 is a graph illustrating the motor RPM based on a brake signal and acceleration signal when in a creep traction state.

### DESCRIPTION OF EMBODIMENTS

The advantages and features of the present disclosure, and the methods for achieving them, will become clearer with reference to the embodiments described in detail below together with the accompanying drawings. However, the present disclosure is not limited to the embodiments disclosed below, but may be implemented in various different forms, and the embodiments are provided only to ensure that the disclosure of the present disclosure is complete and to fully inform those skilled in the art of the scope of the disclosure, and the present disclosure is defined only by the scope of the claims. Description will now be given in detail according to exemplary embodiments disclosed herein, with reference to the accompanying drawings. For the sake of brief description with reference to the drawings, the same or equivalent components may be provided with the same reference numbers, and description thereof will not be repeated.

Hereinafter, description will now be given in detail according to exemplary embodiments disclosed herein, with reference to the accompanying drawings. In the present disclosure, when a component (or region, layer, portion, etc.) is said to be "on," "connected," or "coupled" to another component, it means that it may be directly connected/coupled to the other component, or a third component may be arranged between them.

The terminology used herein is for the purpose of describing embodiments only and is not intended to be limiting of the present disclosure. In this specification, the singular also includes the plural unless the context clearly dictates otherwise. As used herein, the terms "comprise" and/or "comprising" do not exclude the presence or addition of one or more other components, steps, operations, and/or elements.

Although terms like "first" and "second" are used to describe various components, these components are not limited by these terms. These terms are merely used to distinguish one component from another.

Therefore, it should be understood that the "first" component referred to below may also be a "second" component within the technical spirit of the present disclosure. Unless otherwise defined, all terms (including technical and scientific terms) used herein may be used in a manner commonly understood by those skilled in the art to which the present disclosure pertains. Furthermore, terms defined in commonly used dictionaries are not to be interpreted ideally or excessively unless explicitly and specifically defined.

The term 'part' or 'module' used in this embodiment means a software or hardware component such as an FPGA or ASIC, and the 'part' or 'module' performs certain roles. However, the 'part' or 'module' is not limited to software or hardware. The 'part' or 'module' may be configured to be in an addressable storage medium and may be configured to play one or more processors. Accordingly, as an example, the 'part' or 'module' may include components such as software components, object-oriented software components, class components, and task components, as well as processes, functions, attributes, procedures, subroutines, segments of program code, drivers, firmware, microcode, circuits, data, databases, data structures, tables, arrays, and variables. The functions provided within the components and 'parts' or 'modules' may be combined into a smaller number of components and 'parts' or 'modules', or further separated into additional components and 'parts' or 'modules.'

The steps of a method or algorithm described in connection with some embodiments of the present disclosure may be implemented directly in hardware, a software module, or a combination of the two executed by a processor. The software module may reside in RAM memory, flash memory, ROM memory, EPROM memory, EEPROM memory, registers, a hard disk, a removable disk, a CD-ROM, or any other form of storage medium known in the art. An exemplary storage medium is coupled to the processor, such that the processor may read information from, and write information to, the storage medium. Alternatively, the storage medium may be integral to the processor. The processor and the storage medium may reside within an application-specific integrated circuit (ASIC). The ASIC may reside within a user terminal.

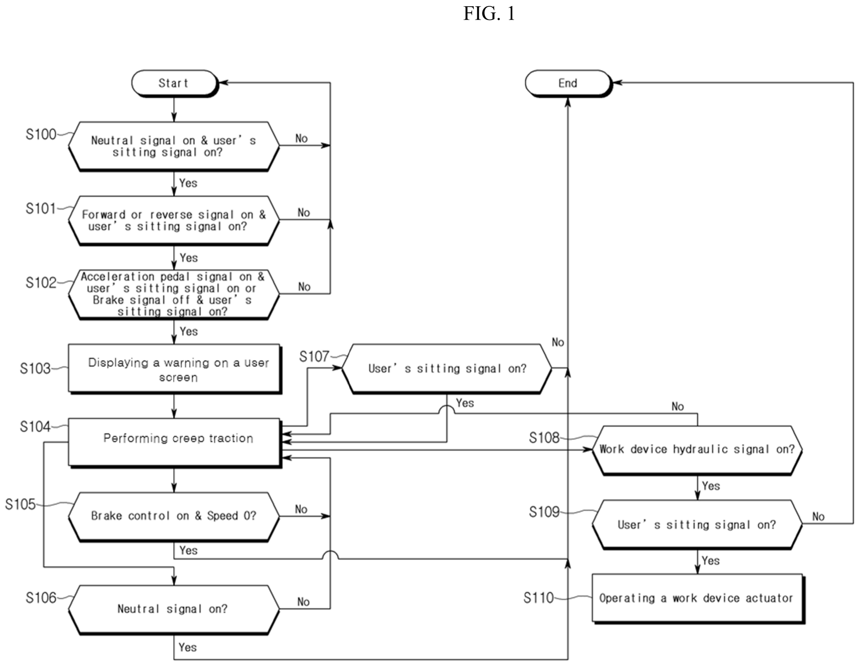

FIG. 1 is a flow chart illustrating a method of controlling creep traction according to an embodiment of the present disclosure.

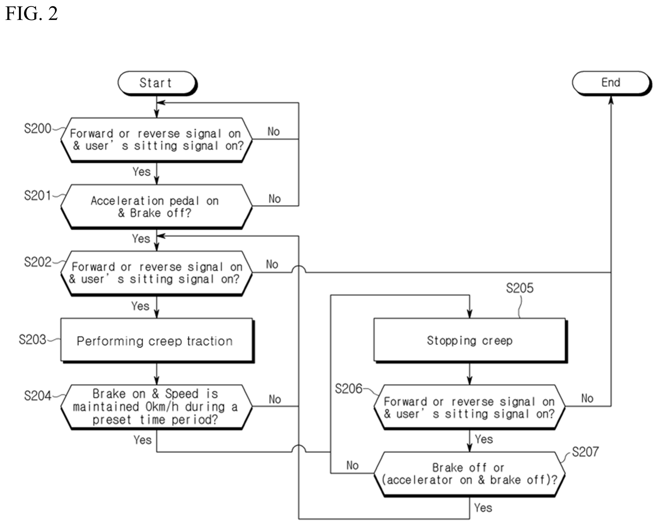

The flow charts shown in FIGS. 1 and 2 may start when the electric forklift is in stopped state.

Referring to FIG. 1, in a step of detecting a neutral signal generation and user's sitting (S100), a control device of the electric forklift may detect a neutral signal of the electric forklift and detect whether the user is seated in the driver's seat. The neutral signal may be input by the user to the control device through a neutral gear of the electric forklift. An additional sensor may be installed in the driver's seat of the electric forklift to detect the user's seated state. If the electric forklift control device fails to detect the neutral signal or detect the user's sitting, the step of detecting a neutral signal generation and user's sitting (S100) is maintained, and if the neutral signal generation and user's sitting are detected, a step of detecting forward/reverse signal generation and user's sitting (S101) may be performed.

In the step of detecting forward/reverse signal generation and user's sitting (S101), the control device may detect either the forward or reverse signal of the electric forklift and detect whether the user's seated state is maintained. The forward/reverse signal can be input by the user to the electric forklift control device through user's manipulation of the forward or reverse gear. Here, the parking state of the electric forklift can be automatically released, or the parking state can be manually released before the user's manipulation for the forward/reverse gear. Since the neutral signal and the forward/reverse signal are both signals that are generated by the user's manipulation and transmitted to the gear, the control device detects the change of the neutral signal into a forward/reverse signal. If the control device fails to detect the forward/reverse signal at the step S101 or detects that the user is not seated, the control device returns to the step of detecting neutral signal generation and user's sitting (S100) and proceeds controlling creep traction. If the control device detects the forward/reverse signal and detects that the user is seated, a step of detecting an acceleration signal and user's sitting or a brake signal and user's sitting (S102) may be performed.

In the step of detecting an acceleration signal and user's sitting or a brake signal and user's sitting (S102), it is also detected whether the user's seated state is maintained, and the user may input the acceleration signal to the control device using the acceleration pedal. Additionally, when the user uses the brake pedal, the brake signal may be detected by the control device. In this step, if the control device detects that the user's sitting is not maintained, or if a brake signal is detected but an acceleration signal is not detected, the step of detecting neutral signal generation and user's sitting (S100) may be performed again, and if it detects that the user's sitting is maintained and an acceleration signal is detected, or if it detects that the user's sitting is maintained and a brake signal is not detected, a step of displaying a warning on the user screen (S103) may be performed.

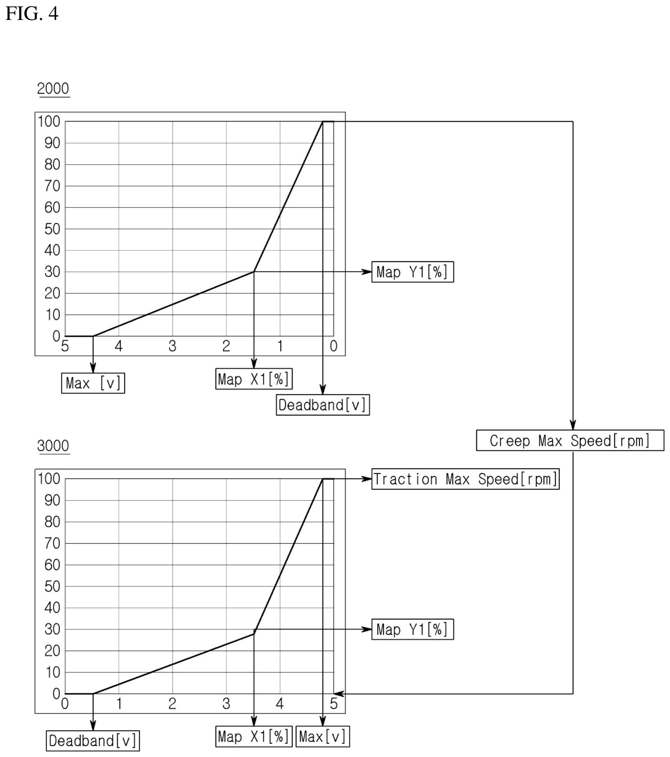

According to one embodiment, the step of detection neutral signal generation and user's sitting (S100), the step of detecting forward/reverse signal generation and user's sitting (S101), and the step of detecting an acceleration signal and user's sitting or a brake signal and user's sitting (S102) may detect the user's creep traction approval. To prevent safety issues, creep traction of an electric forklift may only be performed with the user's approval. The control device may detect creep traction approval when the user inputs a signal using an input device such as a switch, button, or touch screen. Furthermore, the control device may detect the user's creep traction approval based on creep traction approval information stored in the electric forklift's storage device. It may also detect the user's creep traction approval by combining the user's seated state and the signal from the travel lever operated by the user. These two methods may be combined to detect the user's creep traction approval. If the control device fails to detect the user's creep traction approval, the step of detection neutral signal generation and user's sitting (S100) may be performed again. In the step of detecting an acceleration signal and user's sitting or a brake signal and user's sitting (S102), if an acceleration signal higher than a certain level is input to the control device, normal driving may be performed instead of creep traction, which will be described later in FIG. 4.

In the step of displaying a warning on the user screen (S103), if all detection targets of the above steps are detected, performing creep traction may be displayed on the user screen such as a dashboard.

In a step of performing creep traction (S 104), creep traction may be performed at a maximum speed of 2.5 km/h or 0.7 m/s. Creep traction is not performed in conjunction with the operation of the engine as in an engine forklift, but may be controlled by the control device and may be driven by a motor that is operated by a power source. According to one embodiment, the step of detecting forward/reverse signal generation and user's sitting (S101) may be performed even during the step of performing creep traction (S104), and if the forward/reverse signal is not detected during the creep traction, the creep traction may be stopped. In addition, according to another embodiment, even during the step of performing creep traction (S104), the step of detecting neutral signal generation and user's sitting (S100) may be performed, and when the neutral signal is detected, the creep traction may be stopped again and the creep traction may be controlled again from the step of detection neutral signal generation and sitting (S100). The control device may control the creep traction by determining whether the user is sitting, whether the user is controlling the brakes, and whether the steering signal is neutral during the creep traction. At least one of the determinations of whether the user is sitting, whether the user is controlling the brakes, and whether the steering signal is neutral may be performed simultaneously with or sequentially from the step of performing creep traction (S104). According to one embodiment, if the forward or reverse signal is maintained, the creep traction may be continuously possible.

In a step of detecting user's sitting (S107), the seated state of the user may be detected during the creep traction, and if the user's sitting signal is not maintained, the creep traction may be terminated. If the user's seated state is detected during creep traction in the step of detecting user's sitting (S107), the creep traction state may be maintained. The step of detecting user's sitting (S107) may address the safety issue of creep traction continuing in the absence of a user.

In a step of detecting brake control and stop (S105), it is possible to detect whether the brake is applied during creep traction. If the user inputs a brake signal by controlling the brake and comes to stop the electric forklift, the creep traction may stop. However, it is determined through the step of detecting user's sitting (S107) that the user is still sitting and the user does not manipulate the brake pedal, the creep traction may be resumed. If the brake signal is not detected in the step of detecting brake control and stop (S105), the creep traction state may be maintained.

In a step of detecting driving neutral signal (S106), the control may detect a driving neutral signal. The driving neutral signal may be input by the user using the driving lever or button of the electric forklift or a similar operating device, and the electric forklift may determine that it is a neutral signal if there is no forward or reverse signal input by the user. If neutral signal is detected, the creep traction may be terminated. If neutral signal is not detected in the step of detecting driving neutral signal (S106), the creep traction may be maintained. In the creep traction state, the user's brake control, the user's driving neutral signal input, and the user's sitting are detected, and if the user operates the electric forklift through creep traction like an engine forklift, the creep traction is maintained, and if not, the creep traction is stopped to prevent creep traction unintended by the user and maintain creep traction intended by the user.

In a step of detecting a work device hydraulic signal (S108), a signal input to a hydraulically operated work device during creep traction may be detected. This signal may be input by the user operating a separate button or lever to operate the fork of the forklift. After the hydraulic signal of the work device is detected, a step of detecting user's sitting (S109) determines whether the user is sitting, and if the user is sitting, the fork of the forklift is operated through a step of operating a work device actuator (S110) to perform the work intended by the user. At this time, if the user's sitting is not detected in the step of detecting user's sitting (S109), creep traction may be terminated. The step of detecting the work device hydraulic signal (S108) may be performed simultaneously with the step of performing creep traction (S104). Through the above-described steps, the user may perform the intended task using the forklift using creep traction, and the user's sitting may be confirmed at multiple steps to prevent safety issues.

FIG. 2 is a flowchart illustrating a method of controlling creep traction in contrast to the embodiment of the present invention.

Referring to FIG. 2, in a step of detection forward/reverse signal generation and user's sitting (S200), the control device may detect either a forward or reverse signal of the electric forklift and detect whether the user is seated. The forward/reverse signal may be input by the user to the control device through the forward or reverse lever or button of the electric forklift or an equivalent device.

In a step of detecting an acceleration signal and user's sitting or a brake signal and user's sitting (S201), whether the user's sitting is detected and whether the user inputs an acceleration signal to the control device using the acceleration pedal or does not use the brake pedal.

In a step of detecting the forward/reverse signal generation and user's sitting (S202), the user's sitting is detected, and whether the forward/reverse signal is continuously input is detected to determine whether creep traction is performed. At this time, if the acceleration signal is above a certain level, it is possible to switch from creep traction to general driving, which will be described later in FIG. 4.

In a step of performing a creep traction (S203), creep traction may be performed at a maximum speed of 2.5 km/h or 0.7 m/s.

In a step of detecting a brake signal and stopped state (S204), it is detected that the user controls the brake pedal and the electric forklift maintains the stopped state for a preset time, and if this is detected, creep traction may be stopped through a step of stopping a creep traction (S205).

In a step of detecting the forward/reverse signal generation and user's sitting (S206), the control device continuously detects the user's sitting and the forward/reverse signal. If the control device fails to detect the user's sitting or the forward/reverse signal, the control device finally stops the creep traction. If the control device detects the user's sitting and the forward/reverse signal, the control device goes to a step of detecting brake signal and acceleration signal (S207). In the step of detecting brake signal and acceleration signal (S207), if the control device fails to detect the brake signal or detects acceleration signal but fails to detect the brake signal, the control device performs the step S202 again and resumes the creep traction. If the control device detects the brake signal or detects the brake signal but fails to detect the acceleration signal, the control device may stop creep traction through the step of stopping the creep traction (S205).

The method of controlling creep traction according to an embodiment illustrated in FIG. 1 may control creep traction based on the neutral state when control is started compared to the method of controlling the creep traction illustrated in FIG. 2, and may control creep traction by determining the neutral or forward/reverse signal even during creep traction. The driving neutral signal also becomes a judgment factor, which has a great effect in preventing safety accidents for users and work sites. In addition, the operation of work equipment may be performed even during creep traction, thereby increasing user convenience. In addition, the user may be notified that creep traction is in progress, thereby increasing user convenience.

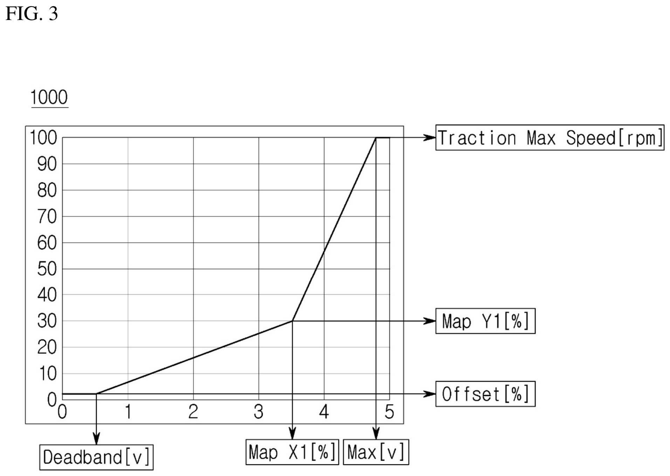

FIG. 3 is a graph showing the engine revolutions per minute based on an acceleration signal when not in creep traction mode according to an embodiment.

Referring to FIG. 3, in Graph 1 (1000), where the x-axis represents the acceleration signal (unit: V) and the y-axis represents the ratio of the motor's revolutions per minute (unit: %) within the normal operating range, the motor's rotations per minute may be confirmed when the acceleration signal is input. At this time, it is assumed that the brake signal is not input. The acceleration signal on the x-axis means the strength of the signal that the user inputs to the control device using the acceleration pedal, and the voltage of the acceleration signal may increase as the acceleration pedal is pressed more and more. The acceleration signal is an acceleration pedal dual signal, and may prevent signal errors by operating with two independent electric signals generated by the acceleration pedal. The y-axis means that the motor is operating at the rotations per minute when the motor is rotating at its fastest within the normal operating range, at 100%. The graph may be divided into three straight sections, the first section, the second section, and the third section, from the left according to the slope. As shown in Graph 1 (1000), the first section may function as a deadband, where the engine RPM does not increase even when the acceleration signal increases. This section prevents sudden acceleration, improving driver comfort and preventing safety issues. The voltage value of the acceleration pedal, which is the boundary between the first and second sections, may be arbitrarily set during the manufacture of the forklift. The rotation speed per minute of the electric forklift motor in the first section may be set as the offset rotation speed, and the motor rotation speeds in the second and third sections may be set based on the motor rotation speed in the first section. In the second section, the motor rotation speed may increase according to the acceleration signal with a smaller slope compared to the third section. In the third section, the motor rotation speed may increase according to the acceleration signal with a slope compared to the second section. By setting the increase rate of the motor rotation speed according to the acceleration signal in the second and third sections differently, sudden acceleration may be prevented, and riding comfort and stability may be improved. The voltage value and the motor rotation speed, which are the boundaries between the second and third sections, may be arbitrarily set during the manufacture of the electric forklift. At this time, the voltage that is the boundary between the second and third sections may be set to a certain percentage (unit: %) of the voltage corresponding to the maximum rotation speed of the motor. According to one embodiment, in the step of detecting an acceleration signal and user's sitting or a brake signal and user's sitting (S102), a step of displaying a warning on the user screen (S103) may be performed.

FIG. 4 is a graph showing the engine RPM based on the brake signal and acceleration signal in a creep traction state according to one embodiment.

Referring to FIG. 4, in Graph 2 (2000), where the x-axis represents the brake signal (unit: V) and the y-axis represents the ratio of the motor RPM (unit: %) within the normal operating range, the RPM of the motor may be confirmed when the brake signal is input during creep traction. According to one embodiment, the acceleration signal on the x-axis represents the strength of the signal input to the control device using the brake pedal, and the voltage of the brake signal may increase as the brake pedal is pressed more. The y-axis represents that the motor is operating at the RPM when the electric motor is rotating at its highest speed within the maximum speed range of creep traction, at 100%. The graph may be divided into three straight sections, the 4th section, the 5th section, and the 6th section, from the left according to the slope. The fourth section, as may be seen in Graph 2 (2000), refers to the section where the brake signal is input to the maximum, the electric forklift stops, and the motor does not rotate. The graph may be divided into three straight sections, the 4th section, the 5th section, and the 6th section, from the left according to the slope. The 4th section, as shown in Graph 2 (2000), refers to the section where the brake signal is input to the maximum, the electric forklift stops, and the motor does not rotate. The voltage value of the brake signal, which is the boundary between the 4th and 5th sections, may be arbitrarily set when the forklift is manufactured. In the 5th section, the motor rotation speed may decrease according to the brake signal with a smaller slope than in the 6th section. In the 6th section, the motor rotation speed may decrease based on the brake signal with a larger slope than in the 5th section. By setting the increase rate of the motor rotation speed based on the brake signal in the 5th and 6th sections differently, sudden stops may be prevented, thereby improving ride comfort and stability. The voltage that serves as the boundary between the 4th and 5th sections may be set when manufacturing an electric forklift, and this voltage may be set as a certain percentage (unit: %) of the voltage corresponding to the maximum rotation speed of the motor. When the brake signal is input to the 4th section and the electric forklift is stopped, the step of detecting brake control and stop (S105) may move on to the step of detecting user's sitting (S107) to determine whether to continue creep traction. In addition, when the brake signal becomes 0, the step of detecting brake control and stop (S105) may return to the step of performing creep traction (S104) to continue creep traction. In the step of performing creep traction (S104), when the acceleration signal is input as a signal corresponding to the 5th or 6th section of Graph 1 (1000), creep traction may be terminated and a normal driving state may be returned to Graph 3 (3000), which is the same as Graph 1 (1000). As shown in Graph 1 to Graph 3 (1000, 2000, 3000), the voltage region of the acceleration signal and the brake signal is distinguished according to the slope of the graph of the number of motor rotations according to the voltage signal of the acceleration signal and the brake signal, and creep traction is controlled accordingly, thereby allowing the user to adjust the creep traction as intended, thereby improving user convenience and preventing the occurrence of safety accidents by preventing sudden changes in the driving of the electric forklift.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention. Further, although the operating effects according to the configuration of the present invention are not explicitly described while describing an embodiment of the present invention, it should be appreciated that predictable effects are also to be recognized by the configuration.

## Claims

1. A method of controlling creep traction of an electric forklift comprising:
detecting user's creep traction approval;
detecting generation of a neutral gear signal and user's sitting;
detecting the neutral gear signal changing to a forward signal or a reverse signal and the user's remaining seated state;
detecting an acceleration signal and the user's remaining seated state or detecting a state in which a brake signal is not input and the user's remaining seated state;
displaying a warning to the user regarding creep traction; and
performing the creep traction,
wherein the creep traction is performed simultaneously with one or more of detecting a brake signal and stopping of the electric forklift, detecting whether a driving lever is in a neutral driving state, detecting the user's sitting or detecting a hydraulic work device operation signal, and
wherein the creep traction is stopped when the user's sitting is not detected during the creep traction.

2. The method of claim 1, wherein, if the neutral signal changed to the forward signal or reverse signal is not detected or the user's sitting state is not detected during the detecting the neutral gear signal changing to the forward signal or reverse signal and the user's remaining seated state, the detecting generation of the neutral gear signal and the user's sitting is performed again.

3. The method of claim 1, wherein, if the acceleration signal and the user's remaining seated state are not detected or the brake signal is detected or the user's remaining seated state is not detected during the detecting the acceleration signal and the user's remaining seated state or detecting the state in which the brake signal is not input and the user's remaining seated state, the detecting generating of the neutral gear signal and the user's sitting is performed again.

4. The method of claim 1, wherein the performing of the creep traction comprises:
maintaining the creep traction when the brake signal is not detected or the stopping of the electric forklift is not detected during the creep traction in the detecting the brake signal and the stopping of the electric forklift, and
maintaining the creep traction when the user's sitting is detected although the brake signal and the stopping of the electric forklift are detected during detecting the brake signal and the stopping of the electric forklift.

5. The method of claim 1, wherein the performing the creep traction comprises:
maintaining the creep traction, if user's driving lever, button, or similar operating device is not in a neutral state in step of detecting whether the user's driving lever, button, or similar operating device is in the neutral state during the creep traction, and
maintaining the creep traction, if the driving is in a neutral state in the step of detecting whether the driving is in the neutral state and the user's sitting is detected in the step of detecting the user's sitting during the creep traction.

6. The method of claim 1, wherein the performing the creep traction comprises maintaining the creep traction if a hydraulic working device operation signal is not detected in the step of detecting the hydraulic working device operation signal.

7. The method of claim 6, wherein the performing the creep traction further comprises:
detecting the user's sitting before operating the work device if the hydraulic work device operation signal is detected in the step of detecting the hydraulic work device operation signal,
wherein the detecting the user's sitting before operating the work device terminates the creep traction if the user's sitting is not detected and operates a work device actuator if the user's sitting is detected.

8. The method of claim 1, wherein the performing the creep traction performs the step of detecting generation of the neutral gear signal and the user's sitting more repeatedly and simultaneously with the step of the performing the creep traction.

9. The method of claim 1, wherein the detecting the acceleration signal and the user's remaining seated state or detecting the state in which the brake signal is not input and the user's remaining seated state performs normal driving, without displaying a warning to the user regarding creep traction and performing the creep traction, if the acceleration signal exceeding a preset voltage is detected.

10. The method of claim 1, wherein the detecting user's creep traction approval is performed during at least one step of the detecting generation of a neutral gear signal and user's sitting, the detecting the neutral gear signal changing to a forward signal or a reverse signal and the user's remaining seated state, and the detecting an acceleration signal and the user's remaining seated state or detecting a state in which a brake signal is not input and the user's remaining seated state.

11. The method of claim 1, wherein the detecting the user's creep traction approval comprises at least one of detecting the user's creep traction approval according to a creep traction approval information which the control system stores in a storage device or detecting the user's creep traction approval by combining whether the user is seated and a signal of the driving lever operated by the user.

12. The method of claim 1, wherein the detecting the acceleration signal and the user's remaining seated state, or detecting the state in which the brake signal is not input and the user's remaining seated state performs again the detecting generation of the neutral gear signal and the user's sitting, if the user's creep traction approval is not detected.

13. The method of claim 1, further comprising detecting the release of the parking state of the electric forklift.
